# EUROPEAN PATENT APPLICATION

(11) **EP 1 953 688 A1**
(43) Date of publication of application: **06.08.2008**
(21) Application number: 07101625.7
(22) Date of filing: 02.02.2007
(51) Int. Cl.: G06Q 10/00

(54) **Electronic device and method of controlling an electronic device for calendar event updates**

(71) Applicant: Research In Motion Limited, Waterloo, Ontario N2L 3W8 (CA)
(72) Inventor: Jain, Rohit Rocky, Waterloo Ontario N2T 2T8 (CA); May, Darrell Reginald, Waterloo Ontario N2V 2K6 (CA)
(74) Representative: Rickard, David John

(57) **Abstract**

A method of controlling a portable electronic device includes receiving a create-new-calendar-event command for storage and display of a calendar event in a calendar view, providing a create-new-calendar-event graphical user interface in response to the receiving the create-new-calendar-event command, receiving scheduling details of the calendar event, and providing a prompt to edit the calendar event on or after a start time of the calendar event.

## Description

The present disclosure relates generally to calendar event scheduling and distribution of notes.

Portable electronic devices including, for example, smart telephones and wireless PDAs are becoming increasingly common and typically integrate functions of personal information management such as calendaring and data communications such as e-mail, World Wide Web browsing and telecommunications in a single device. Such devices run on a wide variety of networks from data-only networks such as Mobitex and DataTAC to complex voice and data networks such as GSM/GPRS, CDMA, EDGE, UMTS and CDMA2000 networks.

It is common for individuals to use such portable electronic devices for storing calendar events for display on the device in an electronic calendar. Some portable electronic devices allow the user of the device to schedule meetings with invitees by creating a new calendar event and entering information such as the time of the meeting, the location and contact information of the invitees. An electronic message is then sent to the invitees in the form of an invitation to the meeting, typically via electronic mail (e-mail). Such electronic invitations provide the invitee with the option to accept or decline the invitation to the meeting. If accepted, the meeting is stored as a calendar event in the electronic calendar of the invitee.

In some cases, it is desirable to keep a summary of a meeting or to record the outcome of the meeting. For example, it may be desirable to prepare meeting minutes or to keep a record of the results of a discussion or vote. Further, it may be desirable to provide meeting invitees or attendees with these records or results. Electronic mail is useful for sending such notes or records to meeting invitees or other interested parties. However, such electronic mail is often difficult to find later. Although electronic calendar events may be provided with a notes field, this field is normally used only for distributing notes prior to a meeting.

Improvements in providing calendar event updates are desirable.

### GENERALLY

According to one aspect, there may be provided a method of controlling a portable electronic device. The method may include receiving a create-new-calendar-event command for storage and display of a calendar event in a calendar view, providing a create-new-calendar-event graphical user interface in response to the receiving the create-new-calendar-event command, receiving scheduling details of the calendar event, and providing a prompt to edit the calendar event on or after a start time of the calendar event.

According to another aspect, there may be provided an electronic device that includes a housing, a display mounted within the housing, a user input device mounted within the housing, a memory mounted within the housing, a communications system for effecting communication to and from said electronic device, a microprocessor within the housing and connected to the memory, the user input device, the display, and the communications system, and an application for execution by the microprocessor. The application may be for receiving a create-new-calendar-event command for storage and display of a calendar event in a calendar view, providing a create-new-calendar-event graphical user interface on said display in response to said receiving the create-new-calendar-event command from said user input device, receiving scheduling details of said calendar event, and providing a prompt to edit the calendar event on or after a start time of said calendar event.

According to another aspect, there may be provided a computer program product for an electronic device. The computer program product may include a computer-readable medium having computer-readable code embodied therein for receiving a create-new-calendar-event command for storage and display of a calendar event in a calendar view, providing a create-new-calendar-event graphical user interface in response to said receiving the create-new-calendar-event command, receiving scheduling details of said calendar event, and providing a prompt to edit the calendar event on or after a start time of said calendar event.

Advantageously, an organizer of a calendar event may be prompted at an appropriate time to add notes to the calendar event. If the timing is inconvenient for the organizer to add notes for any reason, the organizer can select an option to be prompted again. Any notes added to the calendar event can then be sent to any invitees or observers to provide a summary, results or outcomes or any other pertinent notes. The provision of such notes may be further advantageous for observers who do not attend the calendar event (meeting) but wish to be advised of meeting progress or outcome.

### BRIEF DESCRIPTION OF THE DRAWINGS

The embodiments described herein will be better understood with reference to the description and to the following Figures, in which:

Figure 1 is a front view of an exemplary portable electronic device according to an embodiment;

Figure 2 is a block diagram of certain components, including internal components within the portable electronic device of Figure 1;

Figure 3 is an exemplary menu screen displayed on a display of the portable electronic device of Figure 1;

Figure 4 is a flowchart showing the steps in a method of controlling an electronic device;

Figures 5 to 11 show exemplary screens displayed on the display of the portable electronic device at various steps in the method of Figure 4; and

Figure 12 is a flowchart showing the steps in a method of providing a calendar event notification;

Figures 13 to 17 show exemplary screens displayed on the display of the portable electronic device at various steps in the method of Figure 12;

Figure 18 is a flowchart showing the steps in a method of controlling an electronic device;

Figures 19 to 25 show exemplary screens displayed on the display of the portable electronic device at steps in the method of Figure 18;

Figure 26 is a flowchart showing steps in a method of providing a calendar event update;

Figures 27 and 28 show exemplary screens displayed on the display of the portable electronic device at steps in the method of Figure 21; and

Figure 29 is a front view of an exemplary portable electronic device, according to another embodiment.

### DESCRIPTION OF PREFERRED EMBODIMENTS

In the following description, specific details are set forth for the purpose of thorough understanding and explanation of embodiments of the present application. It will be understood, however, that the present application is not limited to the specific details set forth herein. Those skilled in the art will recognize that certain structures and method steps can vary from those described herein.

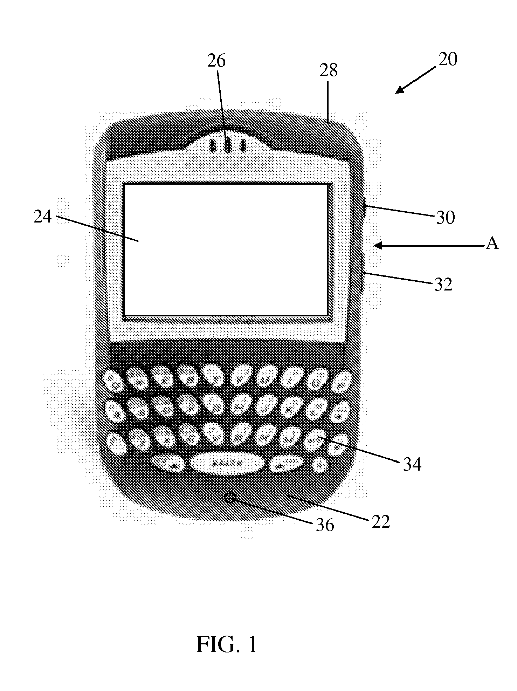

Referring to Figure 1, an exemplary electronic device in accordance with an embodiment is indicated generally by the numeral 20. In the present embodiment, the electronic device 20 is a portable electronic device 20 based on the computing environment and functionality of a hand-held wireless communication device. It will be understood, however, that the electronic device is not limited to a hand-held wireless communication device. Other electronic devices are possible, such as cellular telephones, smart telephones, laptop computers and desktop computers. Referring again to the present embodiment, the portable electronic device 20 includes a housing 22 that frames an LCD display 24, a speaker 26, an LED indicator 28, a trackwheel 30, an exit key 32, a keypad 34, and a microphone 36. The trackwheel 30 and the exit key 32 can be inwardly depressed along the path of arrow "A" as a means to provide additional user-input. The housing 22 is made from a suitable material as will occur to those skilled in the art and can be stored, for example, in a holster (not shown) that includes an attachment for attaching to a user's belt.

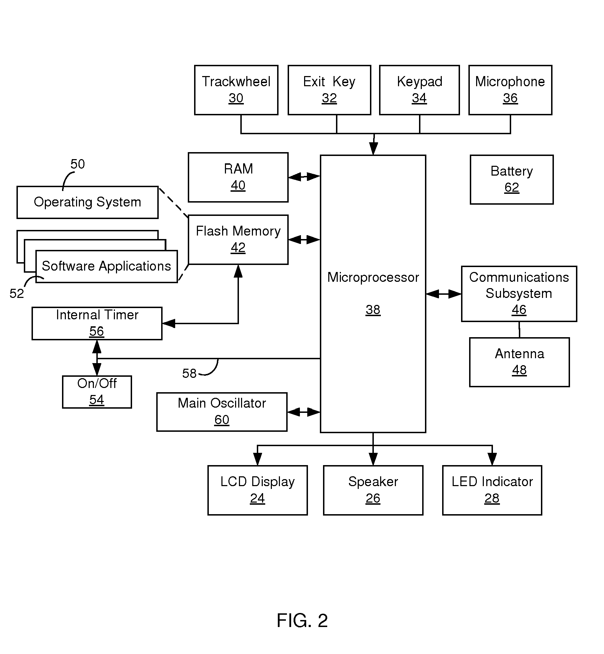

Referring now to Figure 2, a block diagram of certain components, including internal components within the portable electronic device 20, is shown. The portable electronic device 20 is based on a microcomputer that includes a microprocessor 38 connected to a random access memory (RAM) unit 40 and a persistent storage device, which in the present embodiment is a flash memory 42 that is responsible for various non-volatile storage functions of the portable electronic device 20. Operating system software 50 executable by the microprocessor 38 is stored in the flash memory 42. It will be appreciated, however, that the operating system software 50 can be stored in other types of memory such as read-only memory (ROM). In the present embodiment, software applications 52 including Personal Information Manager (PIM) applications are stored in the persistent storage device 42 for execution by the microprocessor 38 for carrying out various functions. The microprocessor 38 receives input from various input devices including the trackwheel 30, the exit key 32, and the keypad 34, and outputs to various output devices including the LCD display 24, the speaker 26 and the LED indicator 28. The microprocessor 38 also interacts with on/off circuitry 54 for powering up the portable electronic device 20 and powering down the portable electronic device 20, and an internal timer 56.

In the present embodiment, the portable electronic device 20 is a two-way RF communication device having voice and data communication capabilities. The portable electronic device 20 also includes Internet communication capabilities. Two-way RF communication is facilitated by a communications subsystem 46 that is used to connect to and operate with a data-only network such as Mobitex or DataTAC, or a complex voice and data network such as a GSM/GPRS, CDMA, EDGE, UMTS or CDMA2000 network, via the antenna 48.

As indicated above, the flash memory 42 stores a plurality of applications executable by the microprocessor 38 that enable the portable electronic device 20 to perform certain operations including the communication operations referred to above. Applications software is provided including, for example, PIM applications such as an electronic mail (messages) application, an address book application, a tasks application, and a calendar application, as well as other applications such as a Web browser application, an options application and a profiles application.

In a data communication mode, a received signal such as a text message or Web page download is processed by the communications subsystem 46 and input to the microprocessor 38 for further processing of the received signal for output to the LCD display 24. A user of the portable electronic device 20 can also compose data items within a software application such as an e-mail messaging application using the keypad 34, for example, in conjunction with the trackwheel 30 and the LCD display 24. Such composed items can then be transmitted over the communications network through the communications subsystem 46 and antenna 48.

Although not shown, a short-range communications subsystem can also be provided for communication between the portable electronic device 20 and other devices or systems. Such short-range communications subsystems include, for example, an infrared device as well as associated components and circuitry, and a Bluetooth^{™} communication system.

A rechargeable battery 62 such as a Li-ion battery is provided for powering the portable electronic device 20.

The user can power down the portable electronic device 20 to a power-off or low-power state by pressing a power on/off button (not shown). Alternatively, the device can be powered up or powered down using a combination of buttons that activate the on/off circuitry 54. As indicated above, the portable electronic device 20 includes an internal timer 56 that can also deliver an interrupt on the interrupt line 58 to power up the portable electronic device 20 when the portable electronic device 20 is in a power-down state and to power down the device when the portable electronic device 20 is in the power-up state. The internal timer 56 is responsible for keeping track of the date and time when the portable electronic device 20 is turned off. A main oscillator 60 is also provided for generating a relatively high-frequency (MHz) clock signal compared to that generated by the oscillator that is part of the internal timer 56 (tens of kHz). The main oscillator 60 includes circuitry that operates when the portable electronic device is on for providing a clock signal to the microprocessor 38 and other components.

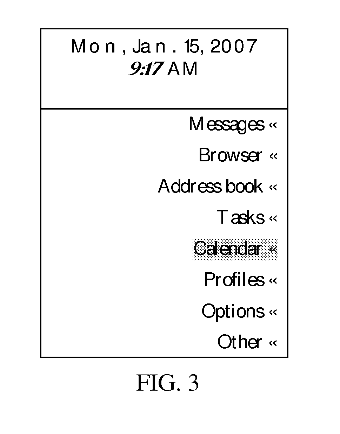

Referring to Figure 3, there is shown an exemplary menu screen that is displayed on the LCD display 24 of the portable electronic device 20. The exemplary menu screen includes a display clock that is updated according to the circuitry of the main oscillator 60 and a list of applications including an electronic mail (Messages) application, a Web browser, an Address book, a Tasks application, a Calendar application, a Profiles application and an Options application. Each of the displayed applications in the list is selectable by, for example, scrolling to the desired application using the trackwheel 30 and pressing inwardly on the trackwheel 30 in the direction of arrow "A".

It will be appreciated that the Calendar application is used for providing a graphical user interface (GUI) for the user to create calendar events and for storage of the calendar events in a database at the flash memory 42, when executed by the processor 38. The Calendar application is used for creating, displaying and storing calendar events such as appointments, lectures, exams, movies, meetings, performances, dinners, ceremonies, etc. as described below. Each calendar event includes a variety of information including a name, a date and time of the event as well as a user-selectable reminder time for the event. For example, the calendar event can include a reminder such as an audible alarm, a visual alarm or even a kinetic alarm such as a vibration, set for a user-selected time prior to the start time of the event to thereby remind the user of the event. The calendar events are viewed using a calendar view in the Calendar application. The calendar view can be any one of a month view, a week view, a day view and an agenda view. Selection of a calendar event in the calendar view results in display of the particulars of that event.

The Messages application is used for data communication between electronic devices, in the form of SMS (Short Message Service) messages or e-mail messages. A user of the portable electronic device 20 can compose, for example, e-mail messages within the Messages application using the keypad 34, for example, in conjunction with the trackwheel 30 and the LCD display 24. Such composed items can then be transmitted over the communications network through the communications subsystem 46 and antenna 48. Similarly, messages, such as e-mail messages, can be received at the portable electronic device 20, via the antenna 48 and communications subsystem 46, further processed at the microprocessor 38 for display on the LCD display 24 using the Messages application.

A method of controlling a portable electronic device 20 will now be described in accordance with an aspect of one embodiment. The method includes receiving a create-new-calendar-event command for storage and display of a calendar event in a calendar view, providing a create-new-calendar-event graphical user interface in response to the receiving the create-new-calendar-event command, receiving scheduling details of the calendar event, and providing a prompt to edit the calendar event on or after a start time of the calendar event.

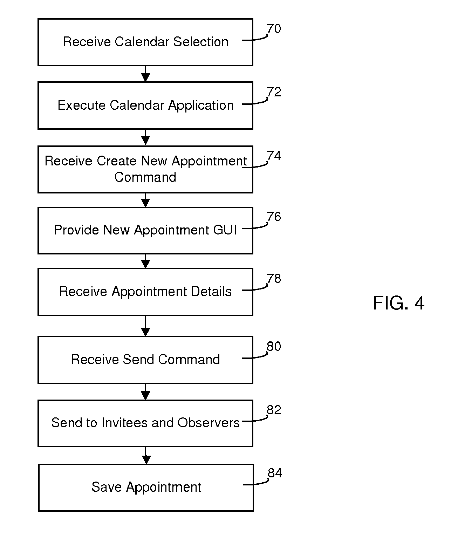

Reference is now made to Figure 4 to describe a method of controlling a portable electronic device in accordance with another aspect of an embodiment. It will be appreciated that the steps described in relation to Figure 4 are carried out by routines or subroutines of the portable electronic device 20 and result from user interaction as described. Coding of software for carrying out such steps is well within the scope of a person of ordinary skill in the art.

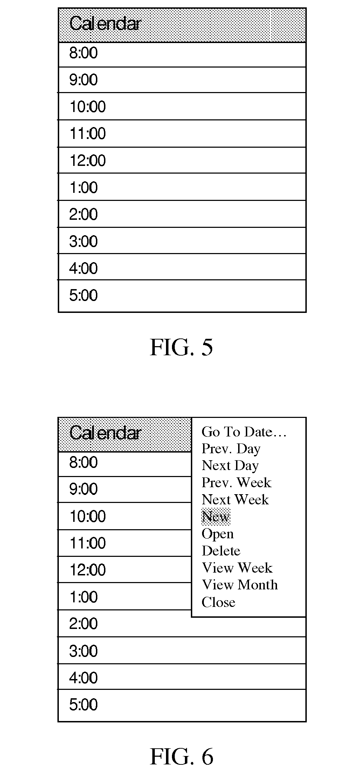

As indicated above, Figure 3 shows an exemplary menu screen that is displayed on the LCD display 24 of the portable electronic device 20. Selection of the Calendar application from the exemplary menu screen of Figure 3 by, for example, scrolling to the Calendar application using the trackwheel 30, and pressing inwardly on the trackwheel 30 in the direction of arrow "A", results in receipt of the selection at the microprocessor 38 (step 70), causing the execution of the calendar application (step 72). Execution of the calendar application results in the display of a default calendar view, as shown in Figure 5. In the example shown in Figure 5, the default calendar view is the day view. It will be appreciated that other views such as the week, month or agenda view can be displayed depending on the default view or can be selected for display. In the calendar view, calendar events such as meetings or appointments that are calendared within a time period that falls within the calendar view and are saved in the flash memory 42, are displayed on the LCD display 24 of the portable electronic device 20. In the present example, there are no calendar events scheduled between 8:00 a.m. and 5:00 p.m. for the date displayed.

In the present example, a user of the portable electronic device 20 wishes to schedule a calendar event (meeting) at a particular time. For the purpose of clarity, this person is referred to as the organizer herein. To schedule the calendar event using the portable electronic device 20, the organizer presses inwardly on the trackwheel 30 in the direction of arrow "A", resulting in the display of the submenu of user-selectable options, as shown in Figure 6. These options include, for example, "Go To Date", "Prev Day", "Next Day", "Prev Week", "Next Week", "New", "Open", "Delete", "View Week", "View Month", and "Close", as shown in Figure 5. Selection of the "Go To Date" option provides a user-editable date field for the user to specify a date for displaying on the LCD display 24. Selection of the "Prev Day" option results in the display of the schedule for the day prior to that displayed in Figure 5. Similarly, selection of the "Next Day" option results in the display of the schedule for the day following that displayed in Figure 5. Selection of the "Prev Week" option results in the display of the schedule for the week prior to the day displayed in Figure 5. Selection of the "Next Week" option results in the display of the schedule for the week following the day displayed in Figure 5. Selection of the "New" option provides a graphical user interface for composition of a new event for addition to the calendar display. Selection of the "Open" option results in the display of details of any selected calendar event on the LCD display 24. Selection of the "Delete" option deletes a selected calendar event. Selection of the "View Week" option results in the display of the weekly schedule for the week including the day displayed in Figure 5. Selection of the "View Month" option results in the display of the monthly schedule for the month including the day displayed in Figure 5. Selection of the "Close" option closes the Calendar application.

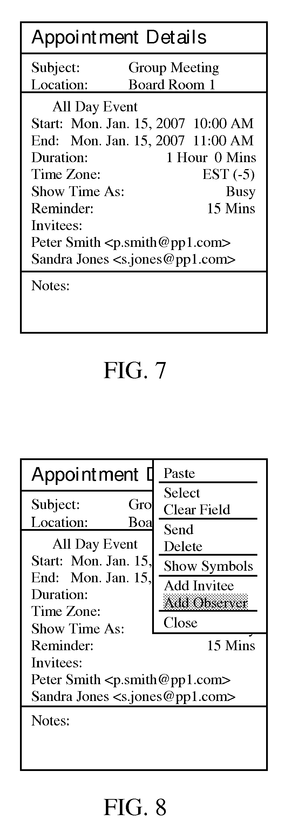

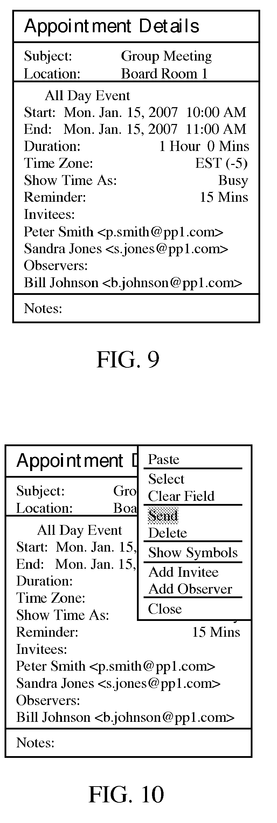

As indicated above, selection of the "New" option from the submenu displayed in Figure 6 acts as a create new appointment command (step 74) and provides a graphical user interface for composition of a new calendar event for addition to the calendar display (step 76). An exemplary graphical user interface for composition of a new calendar event is show in Figure 7. The exemplary graphical user interface shown in Figure 7 includes fields for user-entry of calendar event details, many of which are shown in Figure 7 populated with data entered by the organizer using the input devices such as the trackwheel 30 and the keypad 34. These fields include, for example, a "Subject", a "Location", a "Start" field, an "End" field, a "Duration", a "Time Zone", a Show Time As" field, a "Reminder" field, a list of "Invitees" and "Notes". In the example shown in Figure 7, event details are received upon user entry (step 78). These event details include, for example, the subject, which for the purpose of the present example is "Group Meeting", the location ("Board Room 1 "), a start date and time, an end date and time and a duration, as indicated in Figure 7. The time zone is EST (Eastern Standard Time) and a reminder is set for 15 minutes prior to the start time of the calendar event. Invitees, if any, are also added to the calendar event for the "Group Meeting". In the present example, two invitees are included in the list of invitees. It will be appreciated that these invitees are added, by for example, user-selection of an "Add Invitee" option from a submenu, as shown in Figure 8, followed by user entry of the an e-mail address of an invitee using the keypad 34. Alternatively, the invitee information can be added by selection of a contact from the Address book contacts stored at the portable electronic device 20, as will occur to those skilled in the art. In the present embodiment, the organizer begins entry of the name of the invitee and is provided with a list of matching names from the Address book contacts, for selection. The organizer can then select the appropriate name using the trackwheel 30 or continue entry of an e-mail address using the keypad 34. The user also adds observers, if any, to the calendar event, by selection of an "Add Observer" option from the submenu shown in Figure 8. As is the case for the submenu shown in Figure 6, the submenu shown in Figure 8 is displayed in response to user depression of the trackwheel 30 in the present example. It will be appreciated that each submenu can be displayed as a result of any suitable user-interaction with the portable electronic device 20. The add observer command is received and an "Observers" field is added to the appointment details. In the present embodiment, the organizer begins entry of the name of the observer and is provided with a list of matching names from the Address book contacts, for selection. The organizer can then select the appropriate name using the trackwheel 30 or continue entry of an e-mail address using the keypad 34. Upon receipt of selection of the observer by entry by the organizer, the observer is added to the appointment details, as shown in Figure 9. Any suitable number of invitees or observers can be added to the calendar event.

Upon completion of entry of the calendar event details including the addition of any invitees and the addition of any observers, the user then elects to send the calendar event details to the invitees and the observers by selection of a "Send" option from the submenu shown in Figure 10. Thus, a send command is received at the portable electronic device 20 (step 80). In response to receipt of the send command, an invitation is sent to each of the invitees and a notification is sent to each of the observers (step 82). The invitation is sent electronically, via e-mail, for example, which is received at an electronic device of the invitee. Opening of the e-mail results in the display of the calendar event along with options to accept the invitation or decline the invitation. Acceptance of an invitation results in the storage of the calendar event in memory of the electronic device of the invitee, for display in a calendar view and for reminding the invitee of the calendar event. When displayed in a calendar view, the duration of the calendar event, between the start time and end time, is displayed as busy time. In the event that the invitee attempts to schedule another calendar event for the same time, the invitee determines that there is a conflict given that the duration is shown as busy time. Of course, if the invitee declines the invitation, the calendar event is not saved at the electronic device of the invitee. When the invitee accepts or declines the invitation, a message can be sent to the organizer to advise that the invitation has been accepted or declined.

As indicated above, in addition to sending an invitation to each of the invitees, a notification is sent to the observers (in the present example there is one observer) via e-mail, for example, which is received at the electronic device of the observer. The notification for the observer differs from that sent to the invitee in that there is no invitation to attend the calendar event. The observer is also not presented with any options to accept or decline the calendar event. Instead, the e-mail received by the observer includes the calendar event for storage at the electronic device of the observer with the duration of the calendar event between the start time and end time automatically indicated as free time.

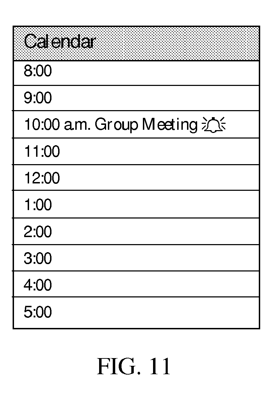

Additionally, the calendar event is also stored in the flash memory 42 at the portable electronic device 20 of the organizer for display in a calendar view, as shown in Figure 11 (step 84).

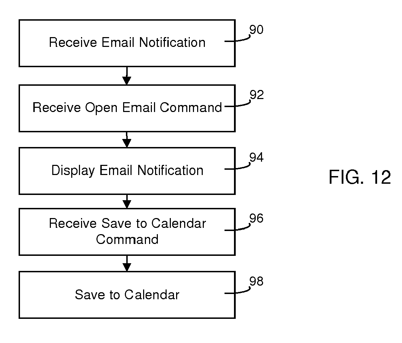

Reference is now made to Figure 12 to describe receipt of the calendar event notification at an electronic device of an observer. It will again be appreciated that the steps described in relation to Figure 12 are carried out by routines or subroutines of the portable electronic device. Coding of software for carrying out such steps is well within the scope of a person of ordinary skill in the art.

The e-mail notification sent from the portable electronic device 20 of the organizer is received at a portable electronic device of the observer (step 90). For the purpose of the present example, the portable electronic device of the observer is similar to that of the portable electronic device of the organizer. It will be appreciated, however that it is not necessary that the portable electronic devices are the same. These electronic devices can differ.

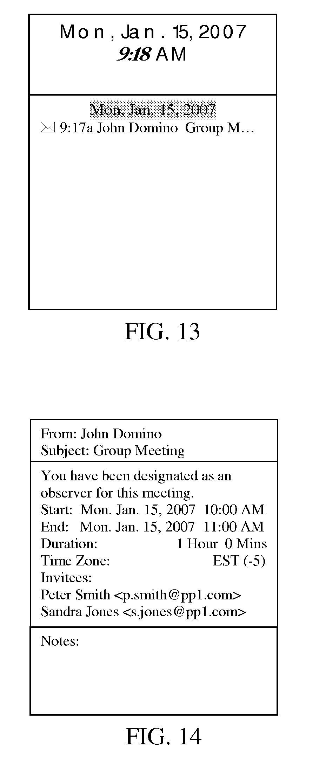

After receipt of the e-mail at the observer portable electronic device, the user selects the Messages application resulting in the display of a list of received electronic messages such as that shown in Figure 13. In the example shown in Figure 13, only one e-mail message is shown in the list. The observer then scrolls to the e-mail and selects an open command from an e-mail submenu, for example. Upon receipt of an open e-mail command (step 92), the electronic notification message sent from the portable electronic device 20 of the organizer, is displayed at the observer portable electronic device (step 94). An exemplary electronic notification message is shown in Figure 14. As shown, the electronic notification message indicates that the observer has been designated as an observer for the calendar event. There is no option provided for accepting or declining the calendar event and there is no message that is sent from the observer portable electronic device 20 to the organizer portable electronic device 20 to indicate that the calendar event has been accepted or declined. Clearly the notification received by the observer is not an invitation to the calendar event.

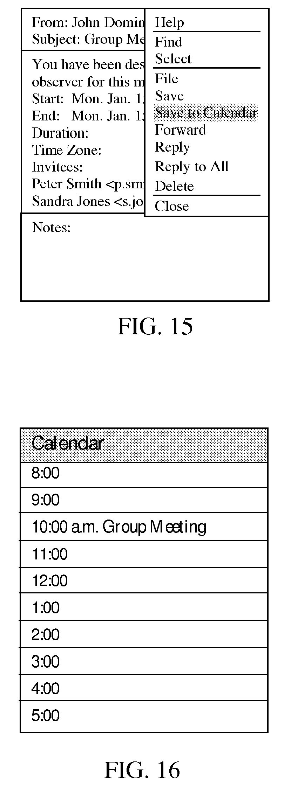

In the present example, the observer can select an option to store the calendar event for storage in a calendar view by selection of a "Save to Calendar" option from a submenu when viewing the electronic message, as shown in Figure 15. Alternatively, the calendar event can be automatically saved at the observer portable electronic device. Upon receipt of the save to calendar command (step 96), the calendar event is stored in the memory at the observer portable electronic device (step 98). Thus, execution of the Calendar application by, for example, selection of the calendar application from a menu screen such as that shown in Figure 3, results in the display of a default calendar view. In the present example, the default calendar view is a day view for the date of the calendar event ("Group Meeting"), as shown in Figure 16.

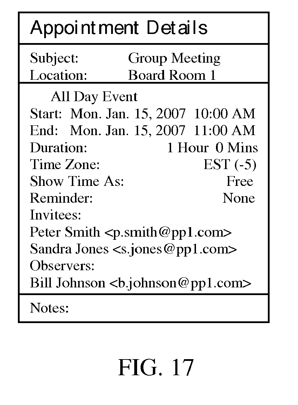

Selection of the calendar event ("Group Meeting") from the calendar view results in the display of the event details as shown in Figure 17. As shown, the "Show Time As" field indicates that the time is shown as free at the observer portable electronic device. Thus, the observer is free to schedule other calendar events such as meetings or appointments during that time period without conflict. In the present example, there is no reminder provided for the observer since the observer will not be attending the group meeting. It will be appreciated that a reminder can be provided, however. It is also contemplated that rather than a reminder prior to the start of the calendar event, a reminder can be issued for the observer at the scheduled end of the calendar event.

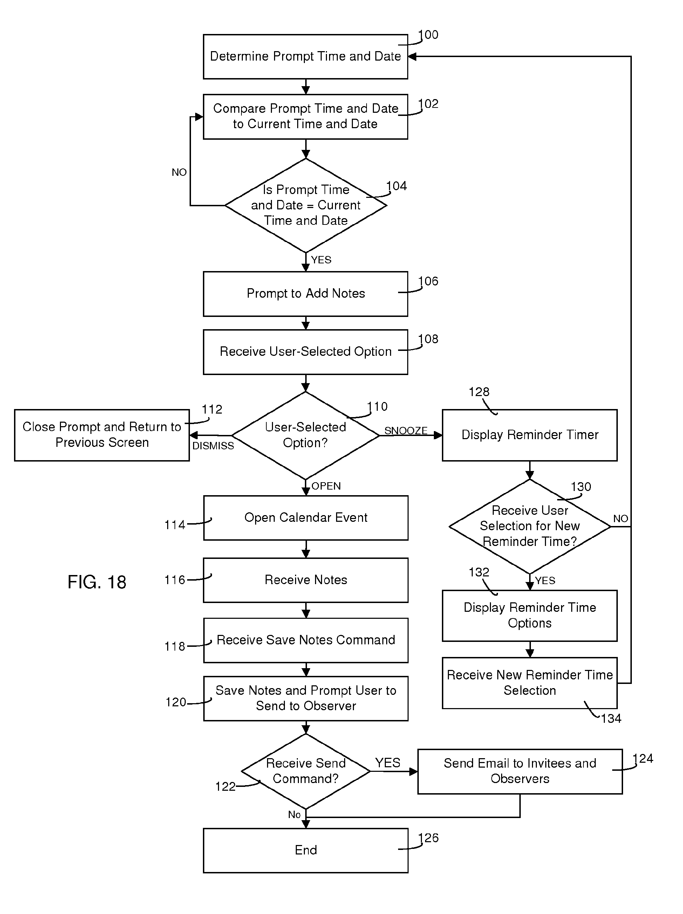

Reference is now made to Figure 18 to describe a method of controlling an electronic device according to an aspect of an embodiment. It will again be appreciated that the steps described in relation to Figure 18 are carried out by routines or subroutines of the portable electronic device 20 and result from user interaction as described. Coding of software for carrying out such steps is well within the scope of a person of ordinary skill in the art.

Upon saving the calendar event at the organizer portable electronic device 20 at step 84, the portable electronic device 20 determines a prompt time and date (step 100) based on the calendar event details. In the present exemplary embodiment, the prompt time and date determined upon saving the calendar event is the "End" time and date of the calendar event. The prompt time and date determined at step 100 is then compared to the current time and date (step 102). If the current time and date according to the main oscillator 60 is not equal to the prompt time and date (step 104), the process returns to the comparison at step 102. If, however, the current time and date is equal to the prompt time and date, the portable electronic device 20 prompts the user to add notes to the calendar event (step 106). Thus, according to the present example, the organizer is prompted to add notes to the calendar event at the "End" time and date of the calendar event. It will be appreciated that the prompt can be provided at any time at or after the "Start" time and date of the calendar event. Providing the prompt at a time at or after the "End time and date" of the calendar event, as in the present example, provides the organizer with a timely reminder to add notes, for example, to summarize an outcome or a decision made.

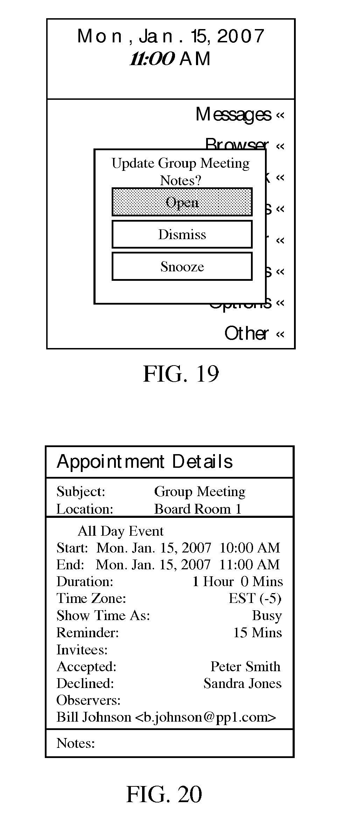

In the present example, the prompt comes in the form of a reminder displayed on the LCD display 24 of the portable electronic device 20, as shown in Figure 19. The visual reminder can be accompanied by any sort of notification such as a flashing light from the LED indicator 28, an alarm or reminder emitted from the speaker 26 or a kinetic reminder such as a vibration from a vibratory device (not shown). In the present example, the prompt includes user-selectable options to "Open", "Dismiss" or "Snooze". User selection of the "Dismiss" option causes the prompt to close and returns to the screen displayed on the LCD display 24 prior to providing the prompt (step 112). For example, the LCD display 24 can return to the menu screen shown in Figure 3.

User selection of the "Open" option causes the calendar event to be opened by displaying the details of the calendar event on the LCD display 24, as shown in Figure 20. In the present example, the organizer scrolls to the "Notes" field and adds notes to the field to summarize the outcome of the calendar event (step 116). It will be appreciated that any notes can be added. Furthermore, the amendments or changes are not limited to the "Notes" field. For example, the organizer may choose to add a further observer.

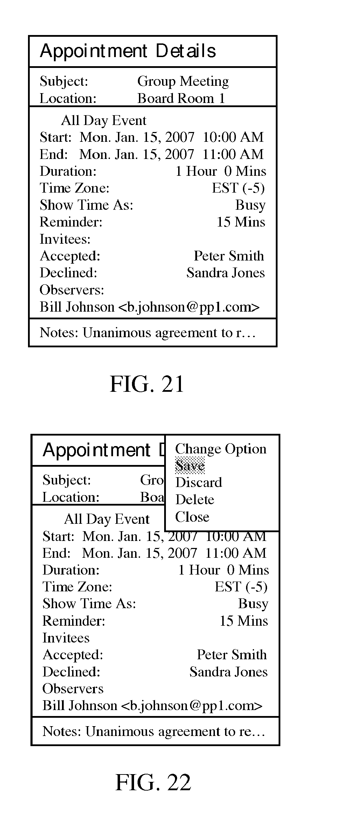

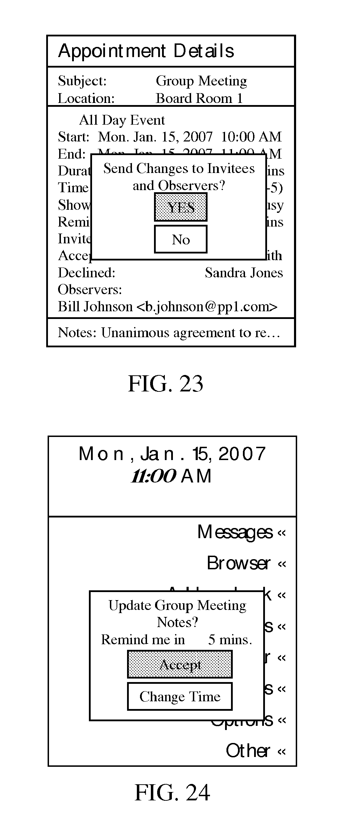

After adding the notes to the calendar event as shown in Figure 21, the notes are saved to the calendar event by user selection (selection by the organizer) of a "Save" option from a list of options in a calendar event submenu, as shown in Figure 22. Upon receipt of the save command (step 118), the calendar event is stored with the added notes and the organizer is prompted to select one of a "Yes" and a "No" option for sending the changes to the calendar event invitees and observers, as shown in Figure 23 (step 120). It will be appreciated that rather than prompting the user as to whether or not to send the changes to the invitees and observers, the changes can be sent automatically upon saving the changes to the calendared record. Alternatively, the changes can be sent to only the observer(s) for the calendar event, either by prompting the organizer or automatically. In the present embodiment, selection of the "Yes" option acts as a send command (step 122) and causes an electronic message including the changes made to the calendar event, to be sent to the invitees and to the observers (step 124) followed by ending of the process (step 126). Selection of the "No" option (step 122) ends the process without sending the changes to the invitees and the observers (step 126).

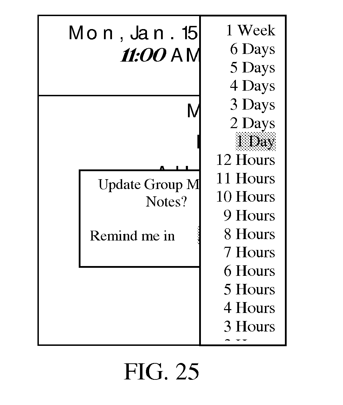

User selection of the Snooze option at step 110, results in the display of a reminder time on the LCD display, as shown in Figure 24 (step 128). According to the present example, a default reminder time of 5 minutes is automatically selected. It will be appreciated that any suitable default reminder time can be set and can be user-selectable, however. The user then has the opportunity to accept the reminder time or to change the time by selection of either the "Accept" option or the "Change Time" option provided. User selection of the "Accept" option results in recalculation of the prompt time and date based on the current time and date and the reminder time accepted as the process returns to step 100. In the present example, the new prompt time and date is determined to be the present time and date plus 5 minutes (step 100). Alternatively, user-selection of the "Change Time" option results in the display of a submenu of user-selectable reminder times, as shown in Figure 25 (step 132). Following receipt of a user selected one of the reminder times shown in the submenu, the process returns to step 100 for calculation of the new prompt time and date.

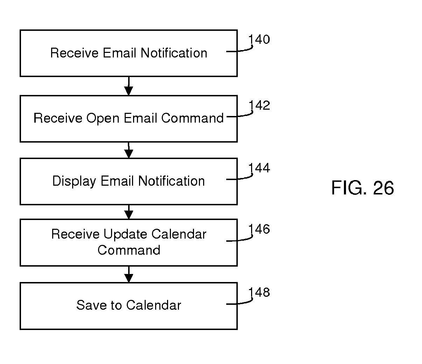

Reference is now made to Figure 26 to describe receipt of the calendar notes. It will again be appreciated that the steps described in relation to Figure 26 are carried out by routines or subroutines of a portable electronic device. Coding of software for carrying out such steps is well within the scope of a person of ordinary skill in the art.

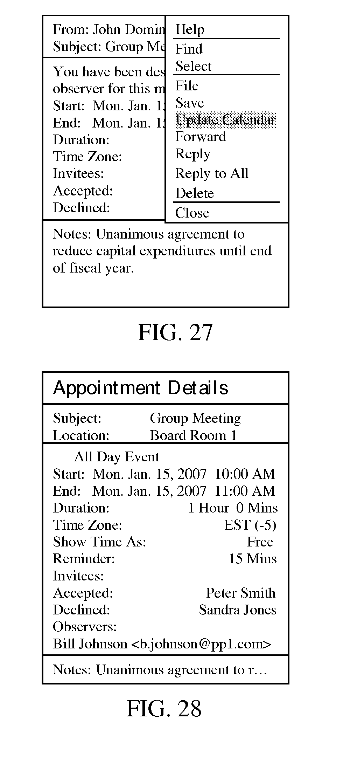

The electronic mail notification sent at step 124 is received at the portable electronic device of, for example, the observer (step 140) and results in a message displayed in the list of received electronic messages. The open e-mail command is received (step 142) as a result of the observer opening the e-mail, as described above with reference to Figure 13 and results in the display of the e-mail similar to that shown in Figure 14. This e-mail, however, includes the notes (as shown in Figure 27) (step 144). Thus, the changes to the calendar event are provided for the observer. In the present example, the outcome is provided in the notes added by the organizer at the end of the calendar event. The observer can update the calendar event by selection of an "Update Calendar" option from a submenu list of options (step 146), causing the previously saved calendar event to be updated by overwriting the changed calendar event including the notes over the previously saved calendar event. Thus, the notes are saved for later viewing by the observer, as shown in Figure 28 (step 148). It will be understood that an electronic mail update can also be sent to the invitees to add notes to the calendar event stored at respective electronic devices of the invitees.

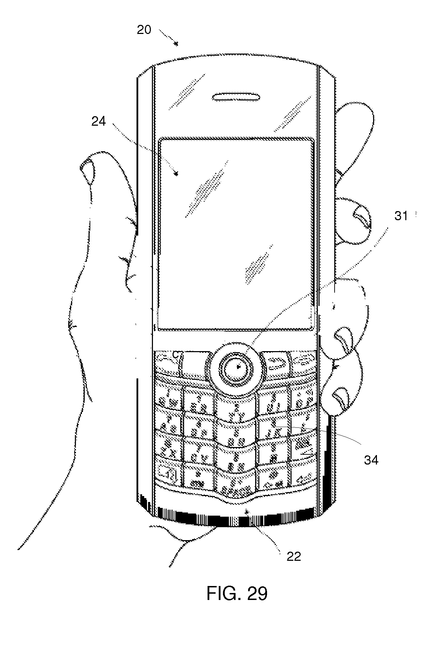

It will be appreciated that the portable electronic device of Figure 1 is shown for exemplary purposes only. Other portable electronic devices such as that shown in Figure 29 are possible. Referring to Figure 29, another exemplary portable electronic device 20 is shown. The portable electronic device 20 includes a housing 22 that frames an LCD display 24. In the present example, however, the portable electronic device 20 includes a trackball 31, rather than a trackwheel. The trackball can be depressed as a means to provide additional user-input. The microprocessor 38 receives input from the trackball 31 which is used for user selection of features from a list or a table on the LCD display 24 of the portable electronic device 20. Selection is carried out by rolling the trackball to roll a cursor (or highlighted region), for example, to the desired selection and pressing inwardly on the trackball. The portable electronic device 20 shown in Figure 29 includes many other features, including, for example, a key pad 34 and other features similar to those described above with reference to Figure 1. It will also be appreciated that reference is made to a trackwheel in the above description for exemplary purposes only, and a trackball 31 such as that shown in Figure 29 can be used.

While embodiments described herein are described by way of particular examples, it will be understood that modifications and variations to these examples are well within the scope and sphere of the present application. For example, in the example described above, the observer is not given the opportunity to request to be removed as an observer. It is possible that upon opening of the notification at the observer electronic device, the user is presented with options such as an option to save to calendar and an option to request removal as an observer, resulting in a message being sent back to the calendar event organizer to remove the observer from the list of observers. It will also be appreciated that the display screens are provided herein for exemplary purposes only and these screens can differ. As indicated, the portable electronic device can also differ while still performing the same functions. The options provided and selection of options from menus and submenus can vary while similar functions are still performed by the portable electronic device. Many other modifications and variations may occur to those skilled in the art. All such modifications and variations are believed to be within the sphere and scope of the present application.

## Claims

1. A method of controlling a portable electronic device, the method comprising:
receiving a create-new-calendar-event command for storage and display of a calendar event in a calendar view;
providing a create-new-calendar-event graphical user interface in response to said receiving the create-new-calendar-event command;
receiving scheduling details of said calendar event; and
providing a prompt to edit the calendar event on or after a start time of said calendar event.

2. The method according to claim 1, wherein said providing a prompt to edit the calendar event comprises providing a prompt to edit the calendar event on or after a scheduled end time of said calendar event.

3. The method according to claim 1 or claim 2, wherein said providing a prompt to edit the calendar event comprises providing a prompt to add notes to said calendar event for storage and display.

4. The method according to any one of the preceding claims, wherein said providing a prompt to edit the calendar event comprises providing a user with a reminder to add notes to said calendar event and providing at least one of a user-selectable option to add notes and a user-selectable option to dismiss the reminder.

5. The method according to claim 4, wherein said providing a prompt to edit the calendar event comprises providing a user-selectable option to provide the user with another reminder later.

6. The method according to any one of the preceding claims, wherein receiving scheduling details comprises receiving an indication of an event invitee and/or an event observer, and said method comprises sending an invitee electronic message and/or an observer notice from said portable electronic device respectively to an invitee electronic device and/or an observer electronic device, prior to said providing a prompt.

7. The method according to claim 6, comprising receiving calendar notes from an input device at said portable electronic device and storing said notes for said calendar event.

8. The method according to claim 7, comprising providing a prompt to send said calendar notes to said event invitee and/or said event observer.

9. The method according to claim 7 or claim 8, comprising sending said calendar notes to said event invitee and/or said event observer in response to receipt of a command to send said calendar notes.

10. The method according to any one of claims 6 to 9, wherein said observer notice comprises an electronic message comprising the calendar event with a period of time, associated with the calendar event, indicated as free time for storage at the observer electronic device.

11. An electronic device comprising:
a display;
a user input device;
a memory;
a communications system for effecting communication to and from said electronic device;
a microprocessor connected to the memory, the user input device, the display, and the communications system; and
an application for execution by the microprocessor for causing the electronic device to implement the method of any one of claims 1 to 10.

12. A computer program product for an electronic device, the computer program product comprising a computer-readable medium having computer-readable code embodied therein for causing the electronic device to implement the method of any one of claims 1 to 10.

## Amended claims

### Amended claims in accordance with Rule 137(2) EPC.

Main Request
**1.** A method of controlling a portable electronic device (20), the method comprising:
receiving a create-new-calendar-event command for storage in memory (42) of a calendar event and for displaying said calendar event in a calendar view on a display (24) of said portable electronic device (20);
providing a create-new-calendar-event graphical user interface on said display (24) in response to said receiving the create-new-calendar-event command;
receiving from an input device (30, 32, 34) of said portable electronic device (20) scheduling details of said calendar event including a start time and an end time;
comparing a current time of said portable electronic device (20) with a prompt time, said prompt time being determined as being at or after said calendar event end time; and
if said current time is equal to said prompt time, providing a prompt to edit the calendar event.
**2.** The method according to claim 1, wherein said prompt time is determined by said portable electronic device (20).
**3.** The method according to claim 1 or claim 2, wherein said providing a prompt to edit the calendar event comprises providing a prompt to add notes to said calendar event for storage and display.
**4.** The method according to any one of the preceding claims, wherein said providing a prompt to edit the calendar event comprises providing a reminder to add notes to said calendar event and providing at least one of a user-selectable option to add notes and a user-selectable option to dismiss the reminder.
**5.** The method according to claim 4, wherein said providing a prompt to edit the calendar event comprises providing a user-selectable option to generate another reminder later.
**6.** The method according to any one of the preceding claims, wherein receiving scheduling details comprises receiving an indication of an event invitee and/or an event observer, and said method comprises sending an invitee electronic message and/or an observer notice from said portable electronic device (20) respectively to an invitee electronic device and/or an observer electronic device, prior to said providing a prompt.
**7.** The method according to claim 6, comprising receiving calendar notes from said input device (30, 32, 34) at said portable electronic device (20) and storing said notes for said calendar event.
**8.** The method according to claim 7, comprising providing a prompt to send said calendar notes to at least one of an invitee electronic device and an observer electronic device.
**9.** The method according to claim 7 or claim 8, comprising sending said calendar notes to at least one of an invitee electronic device and an observer electronic device in response to receipt of a command to send said calendar notes.
**10.** The method according to any one of claims 6 to 9, wherein said observer notice comprises an electronic message comprising the calendar event with a period of time, associated with the calendar event, indicated as free time for storage at the observer electronic device.
**11.** An electronic device (20) comprising:
a display (24);
a user input device (30, 32, 34);
a memory (40, 42);
a communications system (46) for effecting communication to and from said electronic device (20);
a microprocessor (38) connected to the memory, the user input device, the display, and the communications system; and
an application for execution by the microprocessor for causing the electronic device to implement the method of any one of claims 1 to 10.
**12.** A computer program product for an electronic device (20), the computer program product comprising a computer-readable medium (40) having computer-readable code embodied therein for causing the electronic device (20) to implement the method of any one of claims 1 to 10.

## Amended claims

### Amended claims in accordance with Rule 137(2) EPC.

Auxiliary Request
**1.** A method of controlling a portable electronic device (20) based on a microcomputer that has a microprocessor (38) connected to a random access memory 'RAM' unit (40) and a persistent storage device (42) configured to maintain an operating system (50) and a plurality of software applications (52); said software applications including a personal information manager 'PIM' application; each of said operating system (50) and said applications (52) executable on said microprocessor (38); said microprocessor (38) further configured to receive input from at least one input device (30, 32, 34) and to control a display (24) of the portable electronic device (20); the method comprising:
receiving at said microprocessor (38) from said at least one input device (30, 32, 34) a create-new-calendar-event command associated with said PIM application; said create-new-calendar-event command for storing a calendar event in said persistent storage device (42); and displaying of said calendar event in a calendar view of said PIM application on said display (24);
controlling said display (24) to provide a create-new-calendar-event graphical user interface on said display (24) in response to said receiving the create-new-calendar-event command;
receiving at said microprocessor (38) from said at least one input device (30, 32, 34) input representing scheduling details of said calendar event; said scheduling details including a start time and an end time;
storing said scheduling details in said persistent storage device (42) in a first set of fields of a record associated with said PIM application;
examining a clock time maintained by said microprocessor (38) to determine if a current time is on or after said end time;
if said current time is on or after said end time, controlling said display (24) to provide a prompt on said display (24);
receiving at said microprocessor (38) a response to said prompt from said at least one input device (30, 32, 34) comprising additional data associated with at least one additional field in said record; and,
storing said additional data in said persistent storage device (42) in said at least one additional field of said record.
**2.** The method according to claim 1, wherein said portable electronic device (20) determines a prompt time as being at or after said end time of said calendar event and said examining step comprises comparing said current time with said prompt time.
**3.** The method according to claim 1 or claim 2, wherein said providing a prompt to edit the calendar event comprises providing a prompt to add notes to said calendar event for storage and display.
**4.** The method according to any one of the preceding claims, wherein said providing a prompt to edit the calendar event comprises providing a reminder to add notes to said calendar event and providing at least one of a user-selectable option to add notes and a user-selectable option to dismiss the reminder.
**5.** The method according to claim 4, wherein said providing a prompt to edit the calendar event comprises providing a user-selectable option to generate another reminder later.
**6.** The method according to any one of the preceding claims, wherein receiving scheduling details comprises receiving an indication of an event invitee and/or an event observer, and said method comprises sending an invitee electronic message and/or an observer notice from said portable electronic device (20) respectively to an invitee electronic device and/or an observer electronic device, prior to said providing a prompt.
**7.** The method according to claim 6, comprising receiving calendar notes from said input device (30, 32, 34) at said portable electronic device (20) and storing said notes for said calendar event.
**8.** The method according to claim 7, comprising providing a prompt to send said calendar notes to at least one of an invitee electronic device and an observer electronic device.
**9.** The method according to claim 7 or claim 8, comprising sending said calendar notes to at least one of an invitee electronic device and an observer electronic device in response to receipt of a command to send said calendar notes.
**10.** The method according to any one of claims 6 to 9, wherein said observer notice comprises an electronic message comprising the calendar event with a period of time, associated with the calendar event, indicated as free time for storage at the observer electronic device.
**11.** An electronic device (20) comprising:
a display (24);
a user input device (30, 32, 34);
a memory (40, 42);
a communications system (46) for effecting communication to and from said electronic device (20);
a microprocessor (38) connected to the memory, the user input device, the display, and the communications system; and
an application for execution by the microprocessor for causing the electronic device to implement the method of any one of claims 1 to 10.
**12.** A computer program product for an electronic device (20), the computer program product comprising a computer-readable medium (40) having computer-readable code embodied therein for causing the electronic device (20) to implement the method of any one of claims 1 to 10.
